# FASCICULE DE BREVET EUROPEEN

(11) **EP 2 959 644 B1**
(45) Date de publication et mention de la délivrance du brevet: **02.11.2016**
(21) Numéro de dépôt: 13814894.5
(22) Date de dépôt: 19.12.2013
(51) Int. Cl.: H04L 12/40, H04L 12/46

(54) **PROCÉDÉ ET DISPOSITIF DE TRANSMISSION DE TRAMES ENTRE DEUX BUS CAN**
VERFAHREN UND VORRICHTUNG ZUR RAHMENÜBERTRAGUNG ZWISCHEN CAN-BUSSCHIENEN
METHOD AND DEVICE FOR TRANSMITTING FRAMES BETWEEN TWO CAN BUSES

(30) Priorité: 21.02.2013 FR 1351468
(43) Date de publication de la demande: 30.12.2015
(73) Titulaire: Renault s.a.s., 92100 Boulogne-Billancourt (FR)
(72) Inventeur: CAMPOY-MARTINEZ, Sergio, F-92130 Issy Les Moulineaux (FR); BIDAULT, Vincent, F-92150 Suresnes (FR)
(86) Numéro de dépôt international: PCT/EP2013/077327
(87) Numéro de publication internationale: WO 2014/127866

(56) Documents cités:
- EP-A2- 1 030 482
- EP-A2- 1 921 801
- CN-A- 101 870 278
- US-A1- 2011 103 390

## Description

La présente invention concerne la gestion de la transmission de données entre deux bus CAN reliés entre eux par un dispositif d'interconnexion CAN-CAN.

Le domaine de l'invention concerne plus particulièrement, bien que non exclusivement, le domaine de l'automobile.

Aujourd'hui, les véhicules automobiles sont généralement équipés de plusieurs réseaux CAN (initiales anglo-saxonnes mises pour Controller Area Network) permettant à plusieurs calculateurs de communiquer entre eux. Lorsqu'un calculateur d'un premier réseau CAN doit transmettre des données à un calculateur d'un deuxième réseau CAN, ces données doivent transiter impérativement par un pont CAN-CAN interconnectant les bus CAN des deux réseaux CAN.

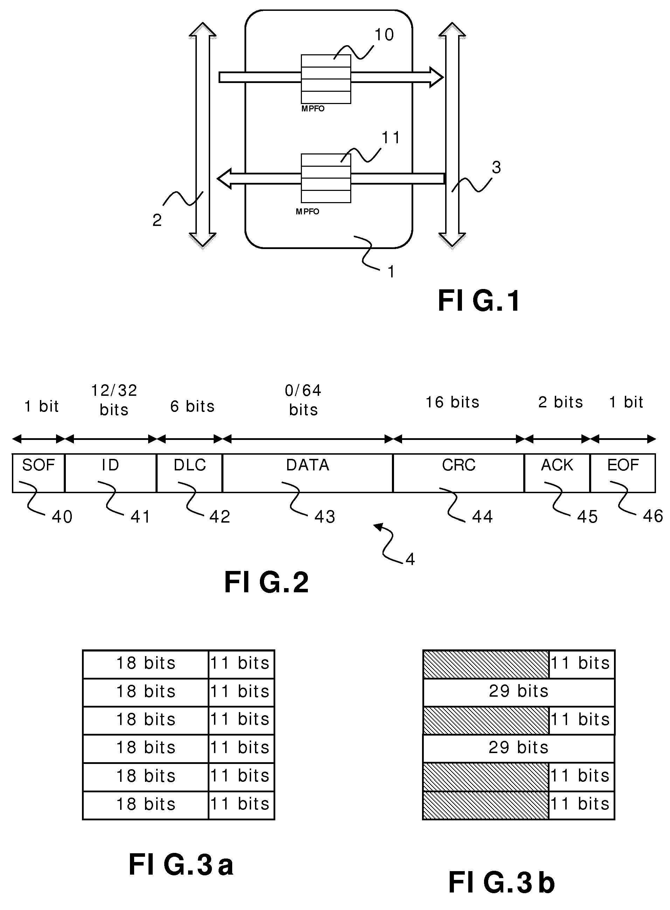

A la différence d'une passerelle, le rôle d'un pont CAN-CAN est de recopier sans modification une trame reçue du premier bus dans le deuxième bus, dès que ce deuxième bus est apte à recevoir des données. La figure 1 illustre de façon schématique et simplifiée la structure classique d'un pont d'interconnexion CAN-CAN 1 bi directionnel interconnectant un premier bus CAN 2 et un deuxième bus CAN 3. Pour la transmission des trames CAN du premier bus 2 vers le second bus 3, le pont CAN-CAN 1 comporte généralement une mémoire 10 RAM de type MPFO (initiales anglo-saxonnes mises pour Most Priority First Out) dont le rôle est de stocker les trames CAN reçues du premier bus 2 tant que le deuxième bus 3 est occupé, et de transmettre à nouveau, dès que le deuxième bus 3 est libre, les trames stockées en tenant compte de leur priorité. Par souci de simplification, les éléments du pont 1 permettant de gérer les priorités n'ont pas été représentés. Le pont CAN-CAN 1 comporte également une mémoire 11 RAM du même type pour la transmission des trames dans l'autre sens.

Conformément aux normes ISO 11898, toutes les trames de données CAN ont la même structure, illustrée schématiquement sur la figure 2. Plus précisément, une trame de donnée CAN 4 comporte classiquement sept champs différents :
- un champ 40 de début de trame ou SOF (initiales anglo-saxonnes mises pour Start Of Frame) composé généralement de 1 bit,
- un champ 41 d'arbitrage de 12 ou 32 bits, comportant un identifiant ID de la trame composé de 11 ou 29 bits,
- un champ 42 de contrôle composé de 6 bits,
- un champ 43 de données composé de 0 à 64 bits,
- un champ 44 de contrôle de redondance ou CRC (initiales anglo-saxonnes mises pour Cyclic Redundancy Check) composé de 16 bits,
- un champ 45 d'acquittement composé de 2 bits,
- un champ 46 de fin de trame ou EOF (initiales anglo-saxonnes mises pour End Of Frame) composé généralement de 7 bits.

Dans la structure précédente, c'est l'identifiant ID contenu dans le champ 41 d'arbitrage qui permet d'indiquer la priorité donnée à une trame CAN, et qui permet par suite au pont CAN-CAN 1 de gérer la recopie des trames stockées dans ses mémoires MPFO 10 et 11 selon leurs priorités relatives.

Aujourd'hui, dans le domaine de l'automobile, toutes les trames de données possèdent un identifiant codés sur 11 bits, ce qui donne une possibilité d'avoir 2¹¹ identifiants différents. De plus, la structure des trames de données précédemment décrite est également utilisée pour faire circuler des trames dites de diagnostic, permettant de détecter des pannes spécifiques lors d'un contrôle du véhicule en usine, ou lors de l'entretien du véhicule par un concessionnaire ou un garagiste. Ces trames de diagnostic circulent à la demande d'un outil de diagnostic branché de façon temporaire sur le véhicule.

Les trames diagnostic ne doivent pas être traitées de façon prioritaire pour ne pas venir perturber les autres trames et risquer de détecter des fausses pannes. Une plage de valeurs d'identifiants parmi les 2¹¹ identifiants possibles est donc réservée aux trames de diagnostic pour leur donner une priorité la plus faible possible.

Or, cette plage réservée à faible priorité est arrivée à épuisement et il est souhaitable dorénavant, comme l'autorisent les normes, de basculer, pour ces trames de diagnostic, à un identifiant codé sur 29 bits et non plus sur 11 bits.

Dans le document EP1921801, le dispositif d'interconnexion CAN-CAN évalue la priorité des trames et compare les identifiants codés sur 11 bits avec les identifiants codés sur 29 bits. Ce document ne divulgue pas l'utilisation ni de plusieurs tampons ni de tampons différents.

Ce faisant, il est apparu que la structure du pont CAN-CAN 1 tel qu'illustrée sur la figure 1 n'est plus adaptée. Une première solution pourrait consister à dimensionner les mémoires RAM MPFO 10 et 11 pour qu'elles puissent stocker des trames avec un identifiant codé par défaut sur 29 bits, comme illustré schématiquement sur la figure 3a. Cette solution génère un surcoût. De plus, comme ces mémoires devront stocker simultanément des trames de données (identifiant de 11 bits) et des trames de diagnostic (identifiants de 29 bits), le taux d'occupation de la mémoire MPFO ne serait pas optimisé, comme montré schématiquement sur la figure 3b (place perdue représentée dans les zones hachurées). Enfin et surtout, la gestion des priorités par le pont CAN-CAN 1 de la figure 1 devient beaucoup plus complexe à réaliser puisqu'il doit comparer des identifiants codés sur 11 bits avec des identifiants codés sur 29 bits.

La présente invention a pour but de pallier les limitations de l'art antérieur en proposant un procédé de transmission de trames CAN et une structure de dispositif d'interconnexion CAN-CAN adaptés.

Pour ce faire, un premier objet de l'invention est un procédé de transmission de trames d'un premier bus CAN vers un deuxième bus CAN au travers d'un dispositif d'interconnexion CAN-CAN, comportant les étapes suivantes:
- génération et transmission sur le premier bus CAN de trames de données d'un premier type comportant chacune un champ d'arbitrage contenant un identifiant codé sur 11 bits associé à une priorité donnée à chaque trame ;
- génération et transmission sur le premier bus CAN de trames de données d'un deuxième type, de priorités inférieures aux trames de données du premier type, chaque trame de données du deuxième type comportant un champ d'arbitrage contenant un identifiant codé sur 29 bits;
- réception et séparation par le dispositif d'interconnexion CAN-CAN des trames de données de premier type et de deuxième type ;
- stockage des trames de données du premier type reçues dans une mémoire RAM de type MPFO du dispositif d'interconnexion CAN-CAN;
- stockage des trames de données du deuxième type reçues dans une mémoire RAM de type FIFO du dispositif d'interconnexion CAN-CAN;
- transmission au deuxième bus CAN des trames de données du premier type par ordre de priorité tant que la mémoire RAM de type MPFO n'est pas vide;
- transmission au deuxième bus CAN, quand la mémoire RAM de type MPFO est vide, des trames de données du deuxième type par ordre d'arrivée.

Selon d'autres particularités possibles additionnelles ou combinées :
- le premier et le deuxième bus CAN étant chacun intégré dans un réseau CAN d'un véhicule motorisé, les trames de données de premier type sont relatives à des données applicatives susceptibles d'être échangées entre les réseaux CAN, et les trames de données de deuxième type sont relatives à des données de diagnostic susceptibles d'être demandées par un outil de diagnostic externe connecté au deuxième bus CAN ;
- l'étape de séparation comprend l'extraction du nombre de bits contenus dans le champ d'arbitrage de chaque trame reçue.
- En variante, l'étape de séparation comprend l'extraction de l'identifiant de chaque trame reçue, et la comparaison de l'identifiant extrait avec une liste pré définie d'identifiants réservée aux trames de données de deuxième type.

L'invention a également pour objet un dispositif d'interconnexion CAN-CAN apte à transmettre des trames de données reçues d'un premier bus CAN vers un deuxième bus CAN, les trames de données reçues étant soit des trames de données d'un premier type comportant chacune un champ d'arbitrage contenant un identifiant codé sur 11 bits associé à une priorité donnée à chaque trame, soit des trames de données d'un deuxième type, de priorités inférieures aux trames de données du premier type, chaque trame de données du deuxième type comportant un champ d'arbitrage contenant un identifiant codé sur 29 bits, le dispositif comportant :
- un module séparateur des trames de données reçues du premier bus, apte à séparer les trames de données du premier type des trames de données du deuxième type;
- une mémoire RAM de type MPFO apte à stocker les trames de données du premier type issues du module séparateur de trames;
- une mémoire RAM de type FIFO apte à stocker des trames de données du deuxième type issues du module séparateur de trames;
- un module de multiplexage dont les entrées sont connectées aux sorties de la mémoire RAM de type MPFO et de la mémoire RAM de type FIFO, le module de multiplexage étant apte à transmettre au deuxième bus CAN des trames de données du premier type par ordre de priorité tant que la mémoire RAM de type MPFO n'est pas vide et à transmettre au deuxième bus CAN, quand la mémoire RAM de type MPFO est vide, des trames de données du deuxième type par ordre d'arrivée.

Avantageusement, la mémoire RAM de type MPFO peut faire partie d'un premier pont CAN-CAN de type MPFO compris dans le dispositif et la mémoire RAM de type FIFO peut faire partie d'un deuxième pont CAN-CAN de type FIFO compris également dans le dispositif.

L'invention et les avantages qu'elle procure seront mieux compris au vu de la description suivante d'un exemple non limitatif de mise en oeuvre de l'invention, faite en référence aux figures annexées, dans lesquelles :
- la figure 1, déjà décrite ci-avant, représente schématiquement la structure d'un pont CAN-CAN bidirectionnel connu;
- la figure 2, déjà décrite ci-avant, représente la structure normalisée d'une trame de données CAN ;
- les figures 3a et 3b, déjà décrites ci-avant, illustrent des exemples de mémoires de type MPFO stockant des trames avec des identifiants codés sur des nombres différents de bits;
- la figure 4 illustre différentes étapes susceptibles d'être mises en oeuvre selon l'invention dans le cadre de la transmission de trames de données et de trames de diagnostic entre deux bus CAN, au travers d'un pont CAN-CAN;
- la figure 5 représente schématiquement un mode de réalisation possible d'un dispositif d'interconnexion CAN-CAN unidirectionnel apte à être utilisé pour la mise en oeuvre du procédé selon la figure 4 ;
- la figure 6 illustre schématiquement un exemple d'occupation des mémoires utilisées dans le dispositif d'interconnexion CAN-CAN de la figure 5.

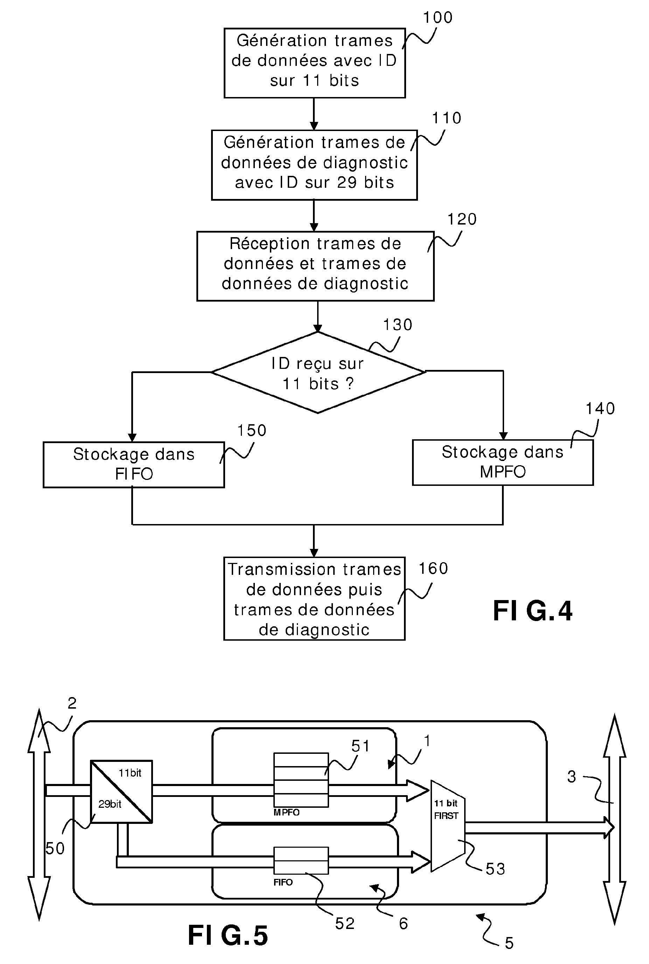

Un procédé de transmission de trames CAN entre un premier bus CAN 2 et un deuxième bus CAN 3 au travers d'un dispositif d'interconnexion CAN-CAN va à présent être décrit en référence à la figure 4. Par souci d'illustration, on se placera dans le domaine non limitatif de l'automobile, dans lequel on souhaite transmettre par le dispositif d'interconnexion :
- d'une part, des trames de données CAN dites applicatives de priorités diverses ;
- d'autre part, des trames de données CAN de diagnostic, dont les priorités sont inférieures à la priorité d'une quelconque des trames de données CAN applicatives.

Bien entendu, le procédé selon l'invention peut trouver un intérêt dans n'importe quel autre domaine d'application où l'on souhaite transmettre des trames de données CAN de hautes priorités et des trames de données de priorités inférieures.

Conformément au procédé, une étape préalable à la transmission proprement dite au travers du pont d'interconnexion CAN-CAN consiste à générer des trames de données CAN dont le champ d'arbitrage (41 sur la figure 2) est codé sur un nombre différent de bits, selon que les trames sont des trames de données applicatives ou des trames de données de diagnostic (étapes 100 et 110 sur la figure 5, qui peuvent être interverties). De manière préférentielle, les identifiants ID des trames de données applicatives sont codés sur 11 bits, alors que les identifiants ID des trames de données de diagnostic sont codés sur 29 bits.

Lorsque le dispositif d'interconnexion CAN-CAN reçoit les trames générées par le premier bus 2 (étape 120), il les discrimine pour leur affecter un traitement propre au type de trame reçu. Cette étape de discrimination, référencée 130 sur la figure 5, s'effectue par exemple en extrayant l'identificateur ID de chaque trame reçue et en reconnaissant le nombre de bits utilisés pour le codage de cet identificateur, ou plus simplement en extrayant le nombre de bits contenus dans le champ d'arbitrage. En variante, le dispositif d'interconnexion dispose d'une liste d'identifiants utilisés uniquement pour le diagnostic, et reconnaît si la trame reçue a un identifiant contenu dans cette liste.

Comme cela a été indiqué précédemment, un dispositif d'interconnexion CAN-CAN doit recopier les données qu'il reçoit telles quelles, et les transmettre dès que le deuxième bus est disponible. En attendant la disponibilité du deuxième bus, ces données doivent être stockées dans le dispositif d'interconnexion. Le stockage diffère selon le type de trames de données reçues. Plus précisément, les trames de données applicatives, pour lesquelles l'identificateur ID est codé sur 11 bits, sont stockées dans une mémoire RAM de type MPFO (étape 140). De manière différente, les trames de données de diagnostic, pour lesquelles l'identificateur ID est codé sur 29 bits, sont stockées dans une mémoire RAM de type FIFO (initiales anglo-saxonnes mises pour First In-First Out) du dispositif d'interconnexion (étape 150).

Les trames de données ainsi stockées sont alors transmises par le dispositif d'interconnexion CAN-CAN au deuxième bus 3 selon les règles suivantes (étape 160) :
- les trames de données applicatives stockées dans la mémoire RAM de type MPFO sont transmises par ordre de priorité et ce, tant que la mémoire de type MPFO n'est pas vide ;
- dès que la mémoire de type MPFO est vide, les trames de données de diagnostic stockées dans la mémoire RAM de type FIFO sont transmises par ordre d'arrivée dans la mémoire.

La figure 5 illustre schématiquement un dispositif 5 d'interconnexion CAN-CAN pour la mise en oeuvre des étapes 120 à 160.

Le dispositif 5 comprend essentiellement :
- un module 50 séparateur des trames reçues du premier bus 2, apte à discriminer, par leur identifiant, les trames de données applicatives des trames de données de diagnostic ;
- une mémoire RAM 51 de type MPFO dimensionnée pour stocker des trames de données applicatives avec un identifiant codé sur 11 bits ;
- une mémoire RAM 52 de type FIFO dimensionnée pour stocker des trames de données de diagnostic avec un identifiant codé sur 29 bits ;
- un module 53 de multiplexage dont les entrées sont reliées aux sorties des mémoires 51 et 52, ce module 53 étant apte à transmettre au deuxième bus 3, d'abord les trames de données applicatives, dans leur ordre de priorité, puis, seulement lorsque la mémoire RAM 51 de type MPFO est vide, les trames de données de diagnostic en respectant leur ordre d'arrivée dans le dispositif d'interconnexion.

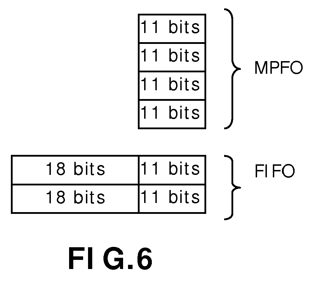

Il convient de remarquer que le dispositif 5 décrit sur la figure 6 peut être un composant spécifique comprenant tous les élément ci-dessus, ainsi que les différents modules logiciels (non représentés) permettant d'une part, le traitement des données stockées dans la mémoire 51 par ordre de priorité et, d'autre part, le traitement des données stockées dans la mémoire 52 par ordre d'arrivée, sous la condition d'avoir une mémoire 51 vide.

En variante, le dispositif 5 d'interconnexion CAN-CAN peut être vu comme l'association de deux ponts CAN-CAN déjà connus :
- un premier pont 1 CAN-CAN à gestion des priorités, identique à celui décrit en référence à la figure 1 ;
- un deuxième pont 6 CAN-CAN à gestion FIFO,
   auxquels on a rajouté le module 50 séparateur des trames reçues, le module 53 de multiplexage, et un module logiciel (non représenté) de gestion du module 53 de multiplexage pour qu'il soit apte à délivrer les trames selon les règles indiquées ci-avant.

Dans tous les cas, on obtient une bonne gestion de la transmission des trames de données selon leur priorité et selon leur type, tout en optimisant l'occupation des deux mémoires.

Bien entendu, le dispositif d'interconnexion peut être également bi directionnel, auquel cas il comprendra une structure similaire permettant la transmission de trames de données applicatives et de diagnostic du bus 3 vers le bus 2.

## Revendications

1. Procédé de transmission de trames d'un premier bus CAN (2) vers un deuxième bus CAN (3) au travers d'un dispositif (5) d'interconnexion CAN-CAN, comportant les étapes suivantes:
- génération (100) et transmission sur le premier bus CAN (2) de trames de données d'un premier type comportant chacune un champ (41) d'arbitrage contenant un identifiant codé sur 11 bits associé à une priorité donnée à chaque trame ;
- génération (110) et transmission sur le premier bus CAN (2) de trames de données d'un deuxième type, de priorités inférieures aux trames de données du premier type, chaque trame de données du deuxième type comportant un champ (41) d'arbitrage contenant un identifiant codé sur 29 bits;
- réception (120) et séparation (130) par le dispositif (5) d'interconnexion CAN-CAN des trames de données de premier type et de deuxième type ;
- stockage (140) des trames de données du premier type reçues dans une mémoire RAM de type MPFO du dispositif (5) d'interconnexion CAN-CAN;
- stockage (150) des trames de données du deuxième type reçues dans une mémoire RAM de type FIFO du dispositif (5) d'interconnexion CAN-CAN;
- transmission au deuxième bus CAN (3) des trames de données du premier type par ordre de priorité tant que la mémoire RAM de type MPFO n'est pas vide;
- transmission au deuxième bus CAN (3), quand la mémoire RAM de type MPFO est vide, des trames de données du deuxième type par ordre d'arrivée.

2. Procédé de transmission selon la revendication 1, **caractérisé en ce que**, le premier et le deuxième bus CAN étant chacun intégré dans un réseau CAN d'un véhicule motorisé, les trames de données de premier type sont relatives à des données applicatives susceptibles d'être échangées entre les réseaux CAN, et les trames de données de deuxième type sont relatives à des données de diagnostic susceptibles d'être demandées par un outil de diagnostic externe connecté au deuxième bus CAN.

3. Procédé de transmission selon la revendication 1 ou la revendication 2, **caractérisé en ce que** l'étape (130) de séparation comprend l'extraction du nombre de bits contenus dans le champ (41) d'arbitrage de chaque trame reçue.

4. Procédé de transmission selon la revendication 1 ou la revendication 2, **caractérisé en ce que** l'étape (130) de séparation comprend l'extraction de l'identifiant de chaque trame reçue, et la comparaison de l'identifiant extrait avec une liste pré définie d'identifiants réservée aux trames de données de deuxième type.

5. Dispositif (5) d'interconnexion CAN-CAN apte à transmettre des trames de données reçues d'un premier bus CAN (2) vers un deuxième bus CAN (3), les trames de données reçues étant soit des trames de données d'un premier type comportant chacune un champ (41) d'arbitrage contenant un identifiant codé sur 11 bits associé à une priorité donnée à chaque trame, soit des trames de données d'un deuxième type, de priorités inférieures aux trames de données du premier type, chaque trame de données du deuxième type comportant un champ (41) d'arbitrage contenant un identifiant codé sur 29 bits, le dispositif comportant :
- un module (50) séparateur des trames de données reçues du premier bus, apte à séparer les trames de données du premier type des trames de données du deuxième type;
- une mémoire RAM (51) de type MPFO apte à stocker les trames de données du premier type issues du module (50) séparateur de trames;
- une mémoire RAM (52) de type FIFO apte à stocker des trames de données du deuxième type issues du module (50) séparateur de trames;
- un module (53) de multiplexage dont les entrées sont connectées aux sorties de la mémoire RAM (51) de type MPFO et de la mémoire RAM (52) de type FIFO, le module (53) de multiplexage étant apte à transmettre au deuxième bus CAN (3) des trames de données du premier type par ordre de priorité tant que la mémoire RAM (51) de type MPFO n'est pas vide et à transmettre au deuxième bus CAN (3), quand la mémoire RAM de type MPFO est vide, des trames de données du deuxième type par ordre d'arrivée.

6. Dispositif (5) d'interconnexion CAN-CAN selon la revendication 5, **caractérisé en ce que** les trames de données de premier type sont relatives à des données applicatives susceptibles d'être échangées entre deux réseaux CAN d'un véhicule motorisé, et les trames de données de deuxième type sont relatives à des données de diagnostic susceptibles d'être demandées par un outil de diagnostic externe connecté au deuxième bus CAN.

7. Dispositif (5) d'interconnexion CAN-CAN selon la revendication 5 ou la revendication 6, **caractérisé en ce que** la mémoire RAM (51) de type MPFO fait partie d'un premier pont CAN-CAN de type MPFO compris dans le dispositif et **en ce que** la mémoire RAM (52) de type FIFO fait partie d'un deuxième pont CAN-CAN de type FIFO compris dans le dispositif.

## Patentansprüche

1. Verfahren zum Übertragen von Datenübertragungsblöcken von einem ersten CAN-Bus (2) an einen zweiten CAN-Bus (3) über eine CAN-CAN-Verbindungsvorrichtung (5), umfassend die folgenden Schritte:
- Erzeugung (100) und Übertragung von Datenübertragungsblöcken eines ersten Typs, umfassend jeweils ein Arbitrierungsfeld (41) mit einem auf 11 Bits codierten Identifikator, der mit einer jedem Datenübertragungsblock verliehenen Priorität verknüpft ist, auf dem ersten CAN-Bus (2);
- Erzeugung (110) und Übertragung von Datenübertragungsblöcken eines zweiten Typs mit niedrigeren Prioritäten als die Datenübertragungsblöcke des ersten Typs auf dem ersten CAN-Bus (2), wobei jeder Datenübertragungsblock des zweiten Typs ein Arbitrierungsfeld (41) mit einem auf 29 Bits codierten Identifikator umfasst;
- Empfang (120) und Trennung (130) der Datenübertragungsblöcke des ersten Typs und des zweiten Typs durch die CAN-CAN-Verbindungsvorrichtung (5);
- Speicherung (140) der empfangenen Datenübertragungsblöcke des ersten Typs in einem RAM-Speicher vom MPFO-Typ der CAN-CAN-Verbindungsvorrichtung (5);
- Speicherung (150) der empfangenen Datenübertragungsblöcke des zweiten Typs in einem RAM-Speicher vom FIFO-Typ der CAN-CAN-Verbindungsvorrichtung (5);
- Übertragung der Datenübertragungsblöcke des ersten Typs in der Prioritätsreihenfolge an den zweiten CAN-Bus (3), solange der RAM-Speicher vom MPFO-Typ nicht leer ist;
- Übertragung der Datenübertragungsblöcke des zweiten Typs in der Ankunftsreihenfolge an den zweiten CAN-Bus (3), wenn der RAM-Speicher vom MPFO-Typ leer ist.

2. Übertragungsverfahren nach Anspruch 1, **dadurch gekennzeichnet, dass** der erste und der zweite CAN-Bus jeweils in ein CAN-Netz eines Motorfahrzeugs integriert sind, die Datenübertragungsblöcke des ersten Typs Anwendungsdaten betreffen, die zwischen den CAN-Netzen ausgetauscht werden können, und die Datenübertragungsblöcke des zweiten Typs Diagnosedaten betreffen, die durch ein externes, an den zweiten CAN-Bus angeschlossenes Diagnosewerkzeug abgefragt werden können.

3. Übertragungsverfahren nach Anspruch 1 oder Anspruch 2, **dadurch gekennzeichnet, dass** der Trennungsschritt (130) das Auslesen der Anzahl von Bits umfasst, die im Arbitrierungsfeld (41) jedes empfangenen Datenübertragungsblocks enthalten sind.

4. Übertragungsverfahren nach Anspruch 1 oder Anspruch 2, **dadurch gekennzeichnet, dass** der Trennungsschritt (130) das Auslesen des Identifikators jedes empfangenen Datenübertragungsblocks und den Vergleich des ausgelesenen Identifikators mit einer vordefinierten Liste von Identifikatoren, die für die Datenübertragungsblöcke des zweiten Typs reserviert sind, umfasst.

5. CAN-CAN-Verbindungsvorrichtung (5), die dazu fähig ist, von einem ersten CAN-Bus (2) empfangene Datenübertragungsblöcke an einen zweiten CAN-Bus (3) zu übertragen, wobei die empfangenen Datenübertragungsblöcke entweder Datenübertragungsblöcke eines ersten Typs, die jeweils ein Arbitrierungsfeld (41) mit einem auf 11 Bits codierten Identifikator enthalten, der mit einer jedem Datenübertragungsblock verliehenen Priorität verknüpft ist, oder Datenübertragungsblöcke eines zweiten Typs mit niedrigeren Prioritäten als die Datenübertragungsblöcke des ersten Typs sind, wobei jeder Datenübertragungsblock des zweiten Typs ein Arbitrierungsfeld (41) umfasst, das einen auf 29 Bits codierten Identifikator enthält, wobei die Vorrichtung umfasst:
- ein Modul (50) zur Trennung der vom ersten Bus empfangenen Datenübertragungsblöcke, das dazu fähig ist, die Datenübertragungsblöcke des ersten Typs von den Datenübertragungsblöcken des zweiten Typs zu trennen;
- einen RAM-Speicher (51) vom MPFO-Typ, der dazu fähig ist, die Datenübertragungsblöcke des ersten Typs, die vom Modul (50) zur Trennung von Datenübertragungsblöcken ausgegeben werden, zu speichern;
- einen RAM-Speicher (52) vom FIFO-Typ, der dazu fähig ist, die Datenübertragungsblöcke des zweiten Typs, die vom Modul (50) zur Trennung von Datenübertragungsblöcken ausgegeben werden, zu speichern;
- ein Multiplexmodul (53), dessen Eingänge mit den Ausgängen des RAM-Speichers (51) vom MPFO-Typ und des RAM-Speichers (52) vom FIFO-Typ verbunden sind, wobei das Multiplexmodul (53) dazu fähig ist, an den zweiten CAN-Bus (3) Datenübertragungsblöcke des ersten Typs in der Prioritätsreihenfolge zu übertragen, solange der RAM-Speicher (51) des MPFO-Typs nicht leer ist, und an den zweiten CAN-Bus (3) Datenübertragungsblöcke des zweiten Typs in der Ankunftsreihenfolge zu übertragen, wenn der RAM-Speicher vom MPFO-Typ leer ist.

6. CAN-CAN-Verbindungsvorrichtung (5) nach Anspruch 5, **dadurch gekennzeichnet, dass** die Datenübertragungsblöcke des ersten Typs Anwendungsdaten betreffen, die zwischen zwei CAN-Netzen eines Motorfahrzeugs ausgetauscht werden können, und die Datenübertragungsblöcke des zweiten Typs Diagnosedaten betreffen, die durch ein externes, an den zweiten CAN-Bus angeschlossenes Diagnosewerkzeug abgefragt werden können.

7. CAN-CAN-Verbindungsvorrichtung (5) nach Anspruch 5 oder Anspruch 6, **dadurch gekennzeichnet, dass** der RAM-Speicher (51) vom MPFO-Typ Teil einer ersten CAN-CAN-Brücke vom MPFO-Typ ist, die in der Vorrichtung enthalten ist, und dass der RAM-Speicher (52) vom FIFO-Typ Teil einer zweiten CAN-CAN-Brücke vom FIFO-Typ ist, die in der Vorrichtung enthalten ist.

## Claims

1. Method of transmission of frames from a first CAN bus (2) to a second CAN bus (3) through a CAN-CAN interconnection device (5), comprising the following steps:
- generation (100) and transmission on the first CAN bus (2) of data frames of a first type each comprising an arbitration field (41) containing an 11-bit coded identifier associated with a priority given to each frame;
- generation (110) and transmission on the first CAN bus (2) of data frames of a second type, of lower priorities than the data frames of the first type, each data frame of the second type comprising an arbitration field (41) containing a 29-bit coded identifier;
- reception (120) and separation (130) by the CAN-CAN interconnection device (5) of the data frames of first type and of second type;
- storage (140) of the data frames received of the first type in a RAM memory of MPFO type of the CAN-CAN interconnection device (5);
- storage (150) of the data frames received of the second type in a RAM memory of FIFO type of the CAN-CAN interconnection device (5);
- transmission to the second CAN bus (3) of the data frames of the first type in order of priority as long as the RAM memory of MPFO type is not empty;
- transmission to the second CAN bus (3), when the RAM memory of MPFO type is empty, of the data frames of the second type in order of arrival.

2. Method of transmission according to Claim 1, **characterized in that**, the first and the second CAN bus each being integrated into a CAN network of a motorized vehicle, the data frames of first type relate to applicational data liable to be exchanged between the CAN networks, and the data frames of second type relate to diagnosis data liable to be requested by an external diagnosis tool connected to the second CAN bus.

3. Method of transmission according to Claim 1 or Claim 2, **characterized in that** the separation step (130) comprises the extraction of the number of bits that are contained in the arbitration field (41) of each frame received.

4. Method of transmission according to Claim 1 or Claim 2, **characterized in that** the separation step (130) comprises the extraction of the identifier of each frame received, and the comparison of the identifier extracted with a pre-defined list of identifiers which is reserved for the data frames of second type.

5. CAN-CAN interconnection device (5) able to transmit data frames received from a first CAN bus (2) to a second CAN bus (3), the data frames received being either data frames of a first type each comprising an arbitration field (41) containing an 11-bit coded identifier associated with a priority given to each frame, or data frames of a second type, of lower priorities than the data frames of the first type, each data frame of the second type comprising an arbitration field (41) containing a 29-bit coded identifier, the device comprising:
- a module (50) separating the data frames received from the first bus, able to separate the data frames of the first type from the data frames of the second type;
- a RAM memory (51) of MPFO type able to store the data frames of the first type arising from the frame-separating module (50);
- a RAM memory (52) of FIFO type able to store data frames of the second type arising from the frame-separating module (50);
- a multiplexing module (53) whose inputs are connected to the outputs of the RAM memory (51) of MPFO type and of the RAM memory (52) of FIFO type, the multiplexing module (53) being able to transmit to the second CAN bus (3) data frames of the first type in order of priority as long as the RAM memory (51) of MPFO type is not empty and to transmit to the second CAN bus (3), when the RAM memory of MPFO type is empty, data frames of the second type in order of arrival.

6. CAN-CAN interconnection device (5) according to Claim 5, **characterized in that** the data frames of first type relate to applicational data liable to be exchanged between two CAN networks of a motorized vehicle, and the data frames of second type relate to diagnosis data liable to be requested by an external diagnosis tool connected to the second CAN bus.

7. CAN-CAN interconnection device (5) according to Claim 5 or Claim 6, **characterized in that** the RAM memory (51) of MPFO type forms part of a first CAN-CAN bridge of MPFO type included in the device and **in that** the RAM memory (52) of FIFO type forms part of a second CAN-CAN bridge of FIFO type included in the device.
